# EUROPEAN PATENT SPECIFICATION

(11) **EP 4 451 527 B1**
(45) Date of publication and mention of the grant of the patent: **17.09.2025**
(21) Application number: 23217281.7
(22) Date of filing: 15.12.2023
(51) Int. Cl.: H02K 15/064, H02K 15/0421, H02K 3/12

(54) **SYSTEM AND METHOD FOR INSERTING I-PINS INTO A STATOR OR ROTOR WINDING ASSEMBLY**
SYSTEM UND VERFAHREN ZUM EINSETZEN VON I-STIFTEN IN EINE STATOR- ODER ROTORWICKLUNGSANORDNUNG
SYSTÈME ET PROCÉDÉ D'INSERTION DE BROCHES EN I DANS UN ENSEMBLE D'ENROULEMENT DE STATOR OU DE ROTOR

(30) Priority: 18.04.2023 IT 202300007470
(43) Date of publication of application: 23.10.2024
(73) Proprietor: Tecnomatic S.p.A., 64013 Corropoli (Teramo) (IT)
(72) Inventor: Lucchetti, Francesco, 64013 Corropoli (TE) (IT); Micucci, Maurilio, 64013 Corropoli (TE) (IT); Ranalli, Giuseppe, 64013 Corropoli (TE) (IT)
(74) Representative: Perronace, Andrea

(56) References cited:
- EP-A1- 4 002 658
- JP-A- 2005 065 386

## Description

The present invention relates to a system and method for inserting I-pins into a stator or rotor winding assembly.

### Background art

One of the ways of making flat-wire stator windings for electric motors is to cut conductor parts, bend them into suitable shapes, insert them into the stator pack, and join the conductor parts with welding joints according to a wiring diagram.

Names are defined according to the shapes and functions taken by the individual parts of a bent conductor.

To date, the most common flat-wire conductor shape is that shown in Fig. 1 and is commonly referred to as a "hairpin" 100 (with two legs, but there are some with a greater number of legs, such as the W-pin). Fig. 2, on the other hand, shows a so-called "I-pin" 200 because the shape seems that of the letter "I" (a single leg). From the electrical point of view, its function inside the winding 600 (see Fig. 4) is to be the input and/or output of the same winding, and for this reason it is also referred to as a phase or route terminal. It should be noted that the term hairpin often mistakenly refers to all the shapes that the conductor can take before being positioned inside a winding 600, thus including the I-pin itself.

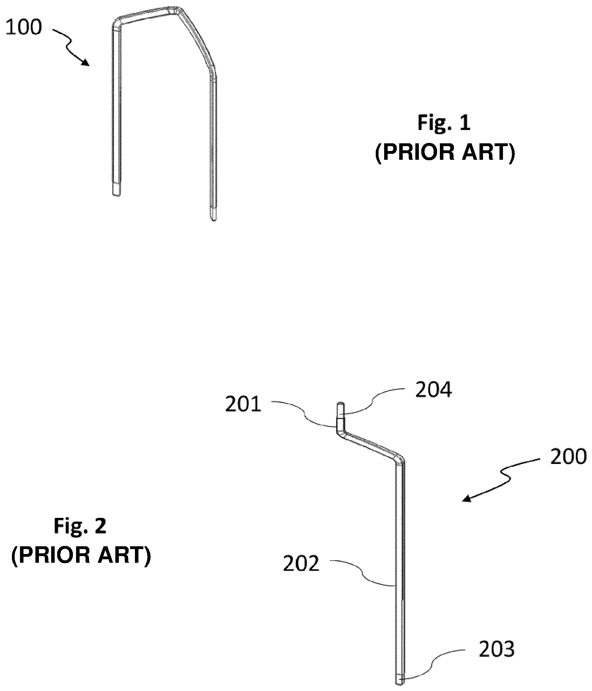

Figure 2 shows the main feature of the I-pin 200, which is to have the straight (vertical) conductor parts 201, 202, which both end with a part without insulating enamel, one facing downwards, 203, and the other upwards, 204, unlike the hairpin 100 which has them both facing downwards. As a result, there are two oblique sections of the conductor in the hairpin 100 while there is only one in the I-pin 200.

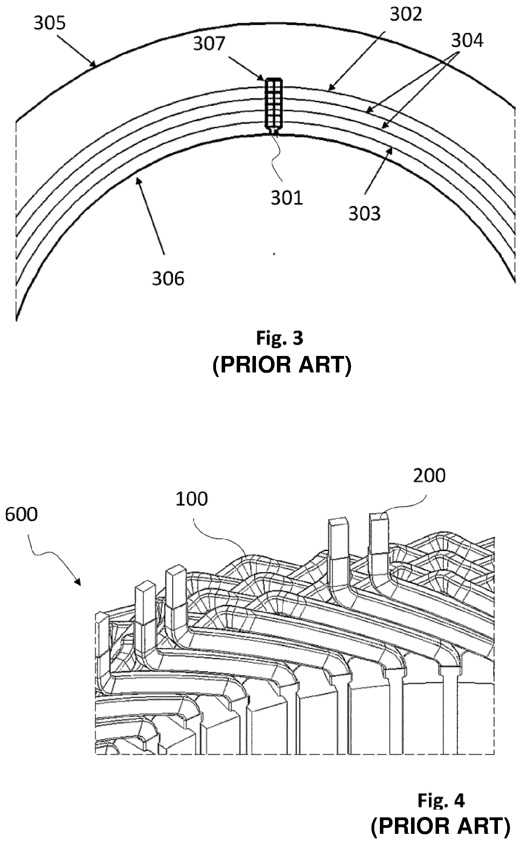

With reference to Fig. 3, the wiring diagram of a stator winding (inserted into a containment 305) determines whether or not to use the aforesaid I-pin as well as the slot and layer position.

The term 'layer' means the average diameter for positioning flat wires in the stator (or rotor) slot 307, whereby outer layer 302 refers to the position of the flat wires 301 with the greatest diameter, while inner layer 306 refers to the position of the flat wires 301 with the smallest diameter, and intermediate layer 303,304 refers to all positions between the innermost layer and the outermost one.

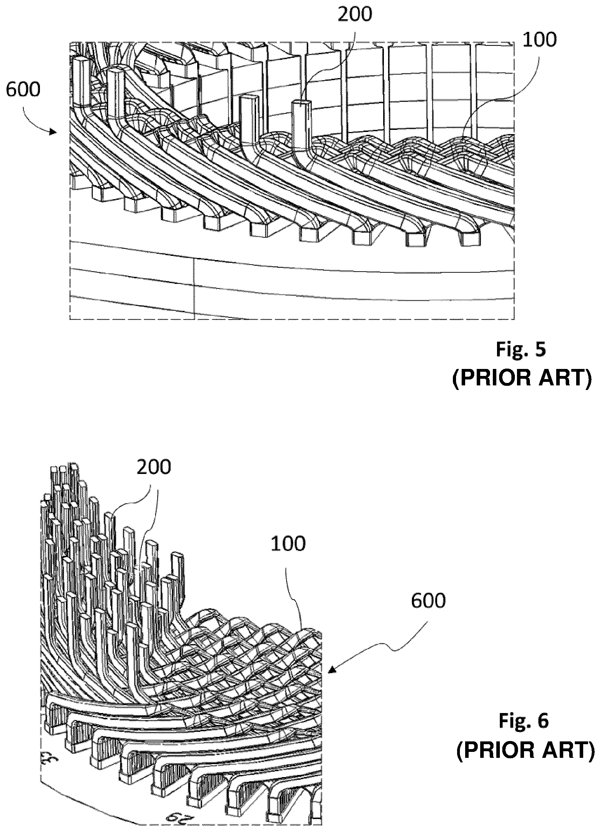

In particular, in a wiring diagram, it is determined in which slots 307 of the stator pack the I-pins are to be inserted, and then in which layers 302-306 of the winding 600, which is shown in Fig. 4 with I-pins 200 on the inner layer and in Fig. 5 with I-pins 200 on the outer layer.

A method for the insertion into the winding 600 is determined according to the layer in which the I-pin 200 is to be inserted. Usually, in a winding 600 there are more than one and in multiple numbers with respect to the number of phases.

Various positions of the I-pins 200 inside the windings of hairpins 100 can be observed in Figs. 4-6; in particular, Fig. 4 shows a winding 600 of hairpins 100 with I-pins 200 on the inner layer 303, Fig. 5 shows a winding 600 of hairpins 100 with I-pins 200 on the outer layer 302, and Fig. 6 shows a winding 600 of hairpins 100 with I-pins 200 on the intermediate layer 304 as well.

However, the insertion of the I-pins is not always simple and without consequence. Indeed, a first problem concerns the innermost I-pins of a winding, which, especially for small-diameter windings, are difficult to place from above by means of a robotic gripper. Indeed, the gripper would have to move radially from the inside to the outside and would interfere with the winding itself and/or other elements of the assembly apparatus.

In particular, there could be interference with hairpins next to the positions assigned to the I-pins.

This also generates the cycle time problem in the complete insertion of the I-Pin with a robot. Indeed, the "complicated" movement that would have to be performed with the robot would take too long for today's needs.

Another problem is that using a robotic gripper also causes the end portion 201,204 of the I-pin to be limited in length. EP 4 002 658 A1 describes a known system suitable for inserting I-pins into a winding assembly.

### Purpose and object of the invention

It is the purpose of the present invention to provide a system and method for inserting I-pins into a stator or rotor winding assembly, as well as an apparatus for assembling the winding assembly and transferring it to a stator or rotor pack.

The present invention relates to a system and a method according to the appended claims.

### Detailed description of embodiments of the invention List of figures

The invention will now be described by way of non-limiting illustration, with particular reference to the figures of the accompanying drawings, in which:
- figure 1 shows the typical shape of a hairpin, according to the prior art;
- figure 2 shows the typical shape of an I-pin, according to the prior art;
- figure 3 shows a depiction of the layers of the flat wires, according to the prior art;
- figure 4 shows a hairpin winding with I-pins on the inner layer, according to the prior art;
- figure 5 shows a hairpin winding with I-pins on the outer layer, according to the prior art;
- figure 6 shows a hairpin winding with I-pins on the intermediate layers, according to the prior art;

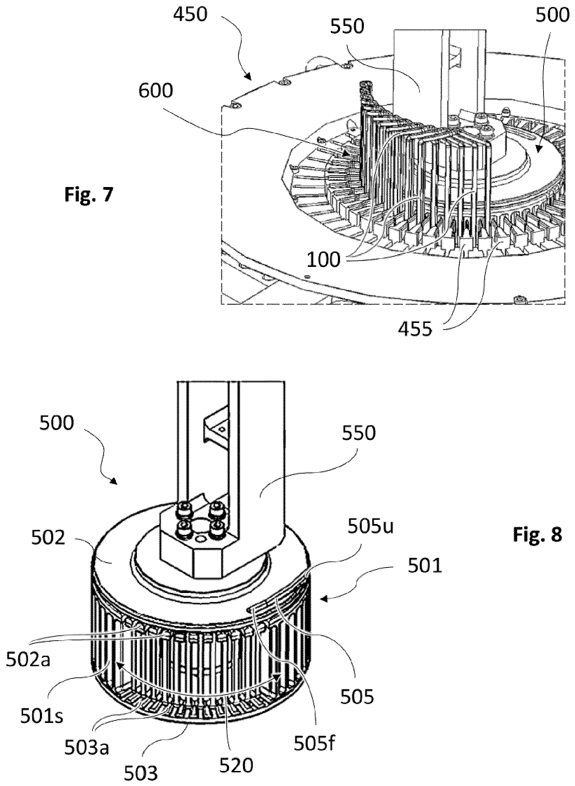

- figure 7 shows an example of a multiple-part containment system, according to an embodiment of the present disclosure;
- figure 8 shows a top view of an inner I-pin containment and positioning system, according to an embodiment of the present disclosure;

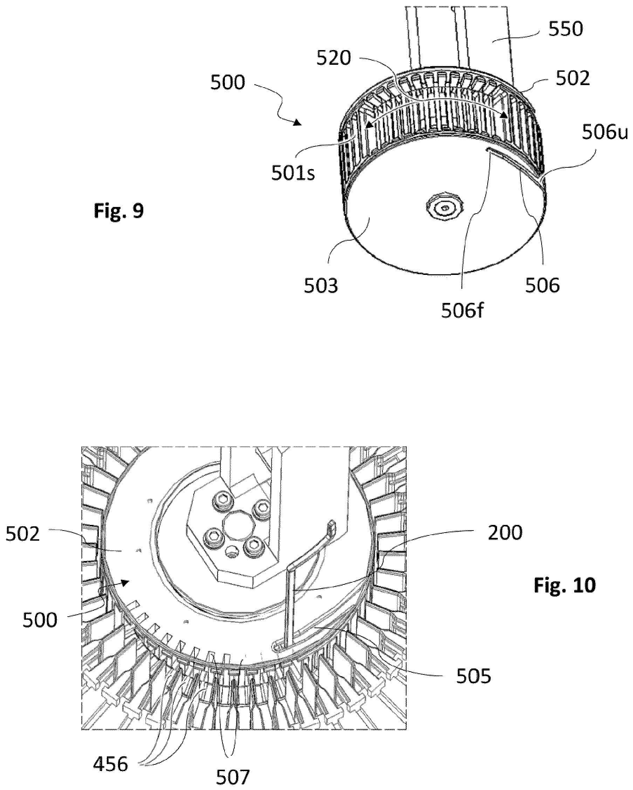

- figure 9 shows a bottom view of an inner I-pin containment and positioning system, according to an embodiment of the present disclosure;
- figure 10 shows the insertion of I-pins into the inner containment slots, where for ease of visualization the hairpins already inserted are not shown, according to an embodiment of the present disclosure;

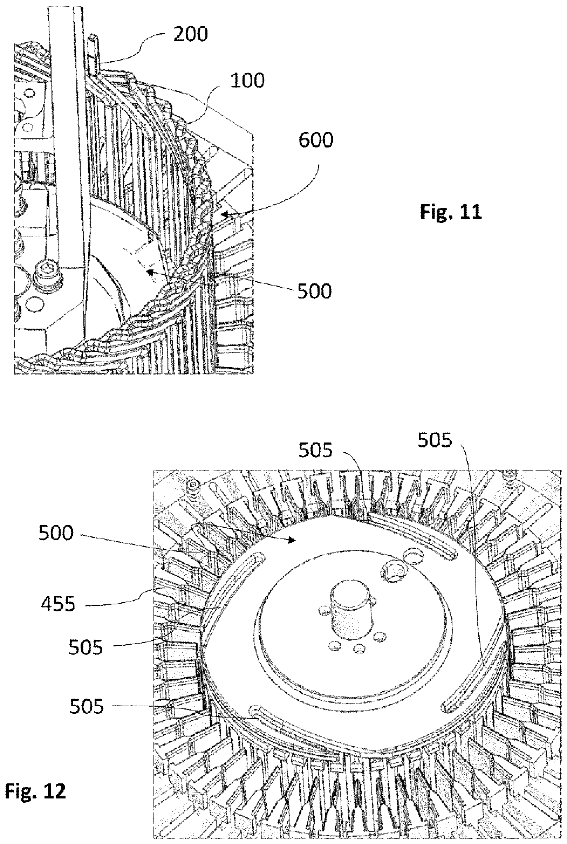

- figure 11 shows the I-pins in the final position in the winding, according to an embodiment of the present disclosure;
- figure 12 shows a perspective view of an inner containment according to an embodiment of the present disclosure, in which multiple cams (four cams are shown, but there can be more or fewer) are provided for the simultaneous insertion of a corresponding number of I-pins;

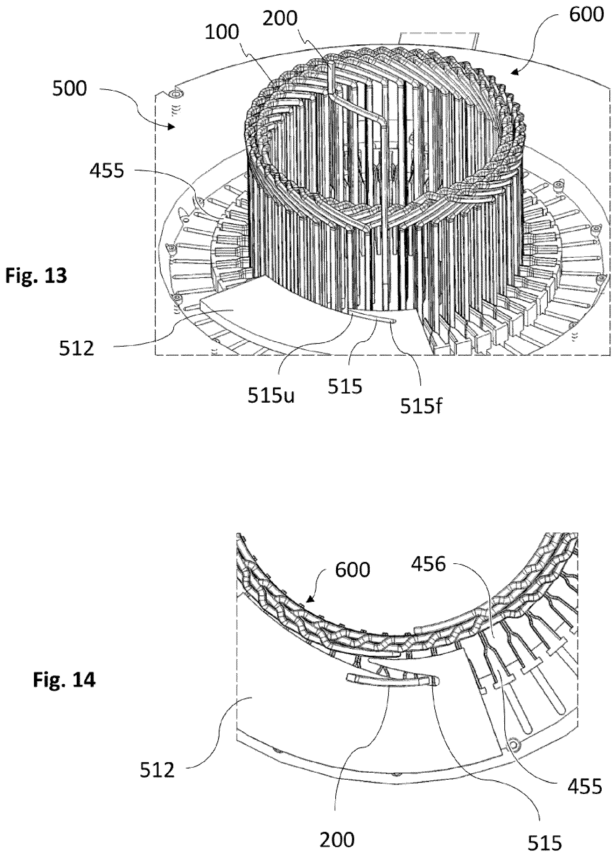

- figure 13 shows a step of the insertion of an I-pin on the outermost layer, according to an embodiment of the present disclosure;
- figure 14 shows a further step of the insertion of an I-pin on the outermost layer, where the leg of the I-pin is inside the slot of the winding containment, according to an embodiment of the present disclosure;

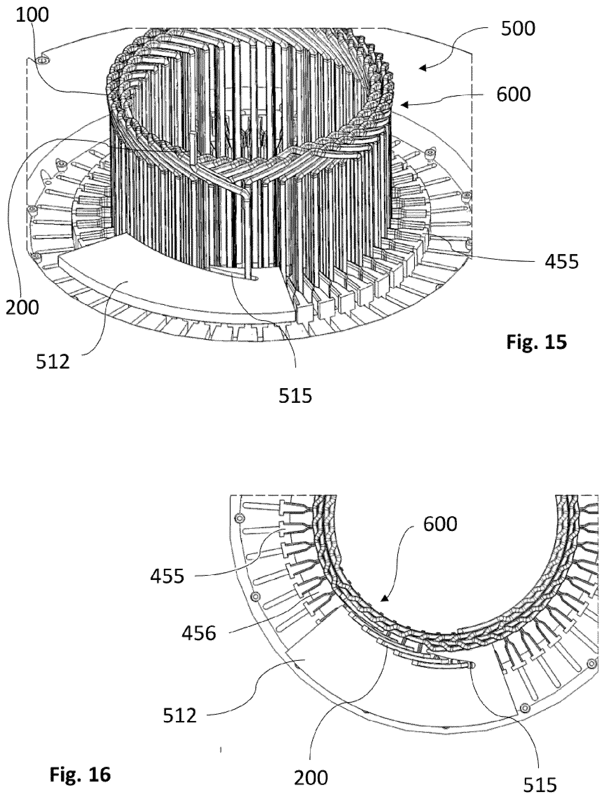

- figure 15 shows a top view of the situation in Fig. 13;
- figure 16 shows a top view of a step in which multiple I-pins are inserted into a single cam, according to an embodiment of the present disclosure;

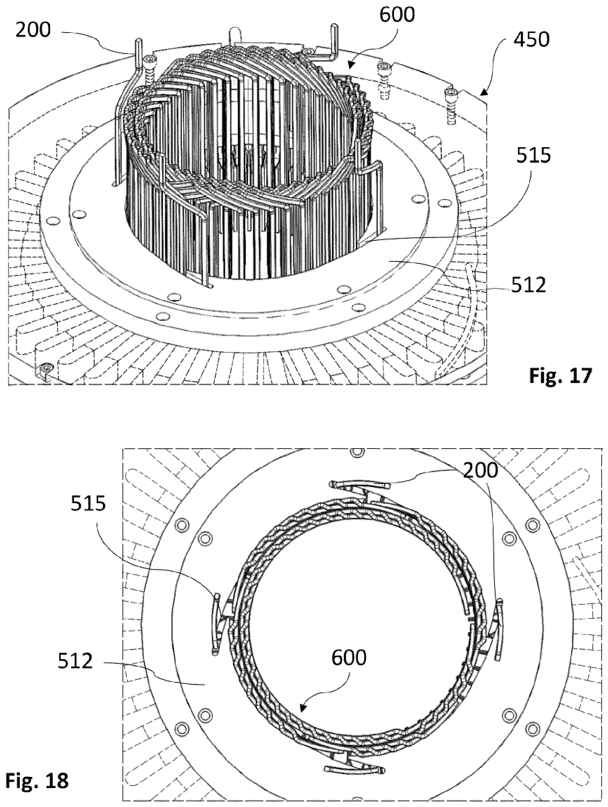

- figure 17 shows a perspective view of an outer containment according to an embodiment of the present disclosure, where multiple cams (four cams are shown, but there can be more or fewer) are provided for the simultaneous insertion of a corresponding number of I-pins;
- figure 18 shows a top view of the situation in Fig. 17;

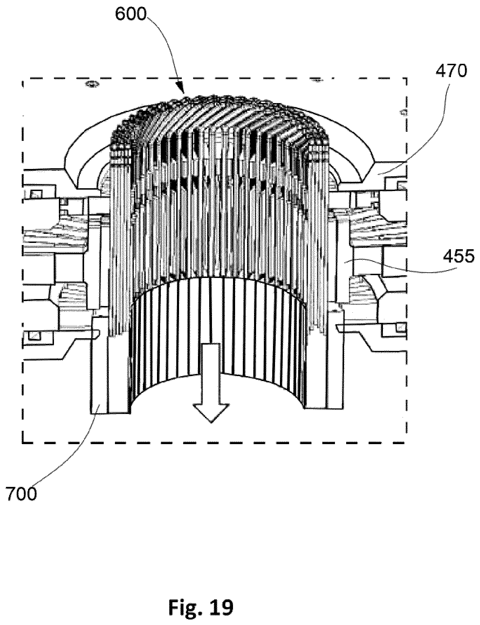

- figure 19 shows a step of inserting the winding formed by the containment, according to an embodiment of the present disclosure; and

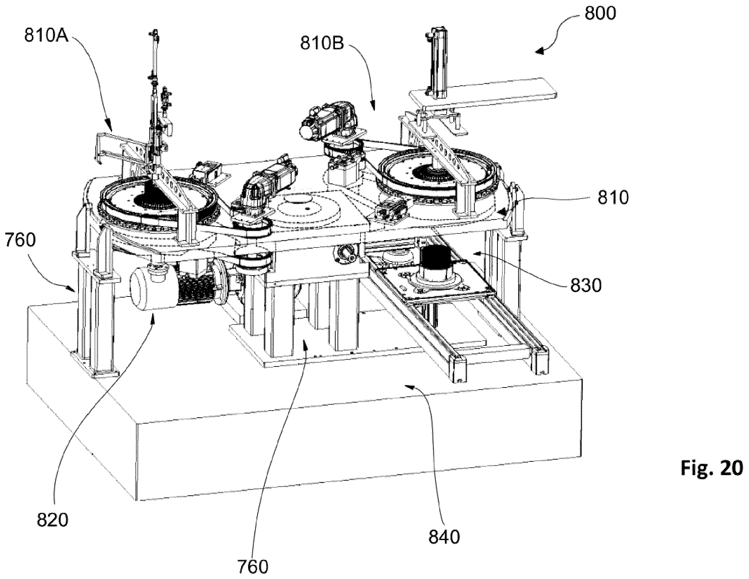

- figure 20 shows a multiple-station machine for forming a stator winding, according to an embodiment of the present disclosure.

It is worth noting here that elements of different embodiments can be combined together to provide further embodiments without restrictions respecting the technical concept of the invention, as those ordinarily skilled in the art will effortlessly understand from the disclosure.

Moreover, the present disclosure also makes reference to the prior art for its implementation, as for the detail features not described, such as elements of minor importance usually used in the prior art in solutions of the same type, for example.

When introducing an element, it always means that there can be "at least one" or "one or more".

When a list of elements or features is given in this disclosure, it is understood that the finding according to the invention "comprises" or alternatively "consists of" such elements.

When listing features within the same sentence or bulleted list, one or more of the individual features can be included in the invention without connection to the other features in the list.

Two or more of the parts (elements, devices, systems) described above can be freely associated and considered as kits of parts according to the invention.

### Embodiments

A system for inserting I-pins 200 according to an embodiment of the present disclosure will be now illustrated, in the case in which they are to be inserted into the innermost layer 303 of the winding 600 (taking the traditional context shown above in Fig. 3 as an example). For this purpose, reference will also be made to a containment system which can be made in various manners, such as with retractable radial fingers, as disclosed in patent application PCT/IB2023/052123 to the Applicant.

See also Fig. 7.

With reference to Fig. 7, according to an aspect of the present disclosure, the winding 600 can already be partially formed, i.e., some of the hairpins 100 forming the winding 600 can already be positioned in the containment system 450, the slots of which are formed between radially retractable elements or fingers or positioners 455. The containment 450 ensures that the I-pins 200, which will be inserted later, are supported on the plane transverse to the rotation axis of the containment. Regarding the vertical positioning (along said rotation axis) of the hairpins/I-pins, it is typically possible to use a support plate (not shown) below the free ends of the inserted hairpins.

The function of the containment system 450 is to keep each single hairpin in a stable position, i.e., to prevent the hairpin from falling toward the inside or toward the outside of the winding 600. Moreover, it must allow inserting all types of hairpins which form a winding 600.

A containment system as a single piece according to the prior art would have the disadvantage of not being capable of removing or moving the various parts serving the support functions for the hairpin. Therefore, according to the present disclosure, it is advantageous to use a containment system formed as several groups of parts, which individually perform the containment functions toward the inside of the winding 600, toward the outside, and downwards.

In particular, as it can be seen in Fig. 7, a central containment assembly 500, positioned axially to the annular containment 450, can be provided. The central containment 500 performs the dual function of inner containment for hairpins and positioning of I-pins. Figs. 8 and 9 show how this assembly is composed of.

The central containment assembly 500 comprises two upper 502 and lower 503 plates (not to be confused with plate for supporting the legs of the hairpins) between which a cylindrical inner containment (vertical wall) 501 is inserted and connected. The central containment assembly 500 is configured to rotate the cylindrical inner containment part 501 and keep the two upper 502 and lower 503 plates fixed, or vice versa. The cams 505 and 506 are provided as notches to the plates 502 and 503, respectively, and have a closed end 505f, 506f and an outlet 505u, 506u. They actually are cam-shaped guides for the legs of the I-pins 200.

The cylindrical inner containment 501 can be made in various manners. For example, it can be a continuous wall (not shown) or one with vertical slits 501s, which allow for a possible overtravel of radially retractable fingers 455. However, as we shall see, there should be cylindrical sectors 520 in which such a wall is missing, in order to be able to make the I-pin exit from the outlets 505u, 506u when they are aligned with a cylindrical sector without a wall.

The central containment assembly 500 can be vertically moved by an arm 550 connected to the upper plate 502.

The insertion method according to the present disclosure provides for the I-pins 200 to be transported, by any means, close to the aforesaid inner containment assembly 501 and housed inside the slots 507 obtained in the inner containment 501, as it can be seen in Fig. 10. As shown precisely in Fig. 10, through the rotation of the cylindrical inner containment 501 and the concomitant action of the cams 505, 506 obtained in the two respective upper and lower fixed plates 502, 503, the I-pins 200 are brought to their final position inside the winding 600.

In other words, once the I-pin 200 is fully inserted into its own inner containment housing slot 507, the rotation of the cylindrical inner containment 501 occurs, which together with the cams 505, 506 of the upper 502 and lower 503 plates, respectively, create the thrust which moves the I-pin 200 to the final outlet position thereof through the (circular sector) opening 520. Such a final position is shown in Fig. 11.

Circumferentially, the slots 507 are between the radially retractable elements 455 but inside the containment 500. This can be done with an overtravel of the retractable elements into the containment through slits 501s or in a different way.

It should be noted again that the containment 500 is open over an arc of circumference 520 since the relative rotation of the plates and the central containment will bring the cam output at this arc of circumference and thus the I-pin will be pushed into the slots 456 of the containment 450.

With reference to Fig. 8, in order to position the I-pin precisely, the face of the upper circular plate 502 facing the lower circular plate can comprise upper radial containment elements 502a arranged in a radial pattern, and the face of the lower circular plate 503 facing the upper circular plate can comprise lower radial containment elements 503a arranged in a radial pattern. The two sets of elements are not necessarily the same in shape. The upper radial containment elements 502a and the lower radial containment elements 503a are configured so as to accommodate the leg 202 of an I-pin 200 between (the slots 507) two consecutive upper 502a and lower 503a radial containment elements and to release the leg 202 exiting from said upper 505u and lower 506u outlets into a radial slot 456 of said cylindrical containment 450 for hairpins.

The insertion of the I-pins 200 can also be multiple, i.e., multiple I-pins 200 can be inserted before rotating the cylindrical inner containment 501, as shown in Fig. 12, in which the hairpins and I-pins have been omitted to illustrate the four cams of the upper plate. Once an I-pin 200 has exited from the positioning cam 505, 506, it will be in the final position thereof in the winding 600.

About the four slots, this number is entirely indicative. More precisely, whether it is the cams of the (upper or lower) inner containment or the outer containment, in a preferred case the one or more upper and lower cam recesses are a plurality of cam recesses, where:
- each cam recess subtends a number M≥1 of slot pitches, with M being an integer,
- between the upper and lower closed ends of a cam recess and the upper or lower outlet of the next cam recess, respectively, there is a distance of at least one slot pitch,
and where all cam recesses of the plurality of cam recesses are arranged in sequence in a predetermined arc of circumference. The I-pins are thus confined to that arc of circumference.

The rotation of the inner cylindrical containment 501 can be continuous until the final positioning of each I-pin 200, or in discrete steps.

The same concept described above for the case in which the I-pins 200 are to be inserted into the innermost layer 306 of the winding 600 can be applied to the case in which they are to be inserted into the outermost layer 302 (Fig. 3), as shown in detail in Figs. 13-16. In this case, the upper annular plate is indicated by 512 and has a cam 515. A lower plate exists and it is always a plate for supporting the free ends of hairpins or I-pins, which do not necessarily have cams.

The outer containment annular plate 512 (only partially shown) is placed above said cylindrical containment 450 for hairpins (on the side of said upper plate 502, if optionally present) or on the opposite side and, as mentioned, comprises one or more recesses 515 of outer containment annular plate with a closed end 515f and an outer containment outlet 515u, similar to those described above for the cylindrical inner containment. Such one or more recess 515 of outer containment annular plate are configured to accommodate the leg 202 of an I-pin 200 simultaneously extending into a radial slot 456 of said cylindrical containment 450 for hairpins, the one or more recesses 515 of outer containment annular plate being positioned so that, upon the relative rotation of the outer containment annular plate 512 with respects to the cylindrical containment 450 for hairpins, said outer containment outlet 515u is positioned so as to lead radially toward said inner containment 500 and thus toward the winding 600.

Also in this case of outer layer, the process and device allow simultaneously positioning multiple I-pins 200 in the winding 600, as shown in Figs. 17 and 18 (even more than one I-pin for each of the recesses).

A third case, in which the I-pins 200 are to be inserted into the intermediate layer 304 (see Fig. 3), can be considered a sub-case of the case described above, in which the I-pins 200 are inserted into the innermost layer 303. Therefore, the same procedure as described above is used to mount the I-pin 200 in an intermediate layer 304.

The assembled winding 600 can be transferred from the containment 450 by pushing from above directly onto the stator pack 700 inserted from below with a lifting cylinder, as in Fig. 19. The element 470 can be an additional upper containment or be part of the containment 450.

With reference to Fig. 20, an apparatus 800 is shown, which comprises an overall formation of the winding 600 with I-pins.

The apparatus 800 first comprises a rotary table, to work for example on two stations, one 810A for assembling the winding under the hairpin inserter from the top and the other 810B for inserting the winding into the stator pack, 700 simultaneously with very short rotation times of the table. It is preferable to rotate the table by 180° in one direction and then in the opposite direction so as to avoid complicated electrical and pneumatic connection systems. In all embodiments of the present invention, the two (or more) stations can be housed in corresponding holes of the rotary table. The table can also be configured to accommodate the storage (not shown) of any special basic conductors to be inserted into the transfer station.

The apparatus 800 further comprises a cylindrical containment assembly (not shown) in the station 810A, which incorporates the containment 450 described above. It is worth adding that the teeth or positioners 455 (not shown, see figures above) can be pushed radially, in turn, by sliders (not shown) which transmit motion to the positioners and are preferably provided with springs (not shown). Moreover, the containment can have a connection for the transmission onto which a specific element, which allows the movement thereof (toothed wheel or belt pulley or other), configured to rotate the containment or the plates with the cams described above.

Since the thickness of the positioners 455 (the part in contact with the conductors) radially increases, the rotation of the cam can form more or less narrow slots similar to the stator ones. Therefore, the concept is to recreate wider slots during assembly and then narrower slots to align the basic conductors, with obvious advantages in the simplicity and effectiveness of assembly and insertion of the winding into the stator pack. The positioners can be conveniently guided by special guides provided in a containment cover element (not shown). Such guides can allow a given stroke to be maintained in all steps of operation. The radial movement of the positioners can be driven by cam mechanisms. The positioner 455 can also be shaped so as to have in section a first portion of radially inner end with a fixed thickness and then a second portion flared (wedge-shaped) toward the radially outer end. Advantageously, the second portion has a first sub-portion with a first sub-length having a first flaring angle and a second sub-portion, contiguous to said first sub-portion, with a second sub-length having a second flaring angle.

Again, the apparatus 800 in Fig. 20 optionally comprises an inner containment support assembly, e.g., with a fixed support (not shown) integral with the rotary table and a support structure which can be equipped depending on the size of the winding to be processed, in which to put the containment 450 with the inner containment 500.

For example, the inner containment 500 (adapted to prevent the basic conductors of the winding from falling radially inward and to insert the I-pins, see above) is supported by means of a support (not shown) rigidly connected to the fixed support, which connects the two assembly and insertion positions on the rotary table 810 in the 180° configuration.

A motor unit 820 of the cylindrical containment can allow both the entire cylindrical containment 450 and only the cylindrical wall of the inner containment 500 to rotate, through appropriate transmission means.

The apparatus 800 can comprise a stator positioning assembly 830 for the insertion of the winding, which aims at positioning the stator to receive the basic conductors and the I-pins within its slots (complete winding, see Fig. 19). It is devised to push the basic conductors from the top down through a single plane which simultaneously pushes all the conductors, and thus also serves the function of bringing the nape (part of the winding with the bridge portions of the hairpins) onto a single horizontal plane.

The foil-pack positioning and winding transfer assembly 830 can comprise means for opening and closing thrust half-rings (not shown) in order to avoid interference with other elements. The thrust means comprise means configured to move the two half-rings on a plane perpendicular to the winding axis from an open position to a closed position in which they form a single thrust disc of said head ends.

Finally, there is a base frame assembly 760 configured to take the rotary table 810 and all elements interacting therewith to a reference height. Table centering rollers and the stator pack raiser (not shown) can be fixed to this base frame, while the table rotation motor can be placed under the rotary table 810.

In an aspect of the present disclosure, the procedure uses an apparatus 800 and comprises the following steps:
**1.** inserting I-pins 200 into the innermost crown by means of the device 810A described above;
**2.** inserting I-pins into the intermediate crowns by means of the device 810A described above;
**3.** inserting one or more I-pins 200 into the outermost crown by means of the I-pin insertion device 512 described above;
**4.** moving the partially assembled winding 600 to position 810B, by means of the rotation of the rotary table 810; and
**5.** inserting the winding 600 into the stator pack.

### Advantages of the invention

With the method and system according to the present disclosure, the insertion of the I-pins is simple and without consequence. Indeed, without using a robotic gripper, the inner I-pins of a winding are easily positionable without interfering with the rest of the apparatus, the other I-pins, and/or the other hairpins.

Again, with the method and system according to the present disclosure, the problems of high cycle time that occur with traditional methods, e.g., with a robot, which has to make a more complicated movement, are overcome.

Moreover, since the apparatus acts in the center of the I-pins, the ends can be of any length, removing a limitation of the prior art.

Again, the system allows the I-pins to be inserted in the same station, which allows assembling a complete winding, thus without movements between stations.

Preferred embodiments have been described above and some variants of the present invention have been suggested, but it is understood that those skilled in the art may make modifications and changes without departing from the related scope of protection, as defined by the appended claims.

## Claims

1. A system (450,500) for inserting I-pins into a winding assembly (600) for a stator or rotor, comprising a cylindrical containment (450) for hairpins (100, 200), the system being **characterized in that** it further comprises a cylindrical inner containment (500) axially inserted into the cylindrical containment (450) for hairpins (100, 200) which comprises a series of radial slots (456) sequentially spaced apart by one slot pitch, wherein the cylindrical inner containment (500) further comprises:
- an upper circular plate (502) with one or more upper cam recesses (505) having an upper closed end (505f) and an upper outlet (505u) on an outer circular perimeter thereof;
- a lower circular plate (503) with one or more lower cam recesses (506) having a lower closed end (506f) and a lower outlet (506u) on an outer circular perimeter thereof;
- a vertical cylindrical wall (501), which extends from the upper circular plate (502) to the lower circular plate (503) and is rotatably mounted with respect to said upper circular plate (502) and lower circular plate (503);
and wherein:
- the upper circular plate (502) and the lower circular plate (503) are mutually integral;
- the one or more upper and lower cam recesses (505, 506) are corresponding in number and correspondingly positioned so as to be configured to insert a leg (202) of at least one I-pin (200) in both recesses;
- the vertical cylindrical wall (501) is not continuous and comprises one or more voids (520), in a number corresponding to said one or more upper cam recesses (505), along an entire vertical extension of an arc of circumference, the one or more voids (520) being positioned so that, upon relative rotation of the vertical cylindrical wall (501) with respect to said upper circular plate (502) and lower circular plate (503), said upper (505u) and lower (506u) outlets are positioned to lead into the arc of circumference of said one or more voids (520);
- a face of the upper circular plate (502) facing the lower circular plate comprises upper radial containment elements (502a) arranged radially;
- a face of the lower circular plate (503) facing the upper circular plate comprises lower radial containment elements (503a) arranged radially; and
- the upper radial containment elements (502a) and the lower radial containment elements (503a) are configured to accommodate the leg (202) of the at least one I-pin (200) between (507) two consecutive upper (502a) and lower (503a) radial containment elements and to release the leg (202) exiting from said upper (505u) and lower (506u) outlets into a radial slot (456) of said cylindrical containment (450) for hairpins (100, 200).

2. A system according to claim 1, wherein said cylindrical containment (450) for hairpins (100, 200) comprises a series of radially retractable fingers (455) to form the series of radial slots (456), and wherein said vertical cylindrical wall (501) comprises, where said one or more voids (520) are not present, a series of vertical slits (501s) configured for overtravel of the radially retractable fingers (455).

3. A system according to claim 1 or 2, wherein said one or more upper and lower cam recesses (505, 506) are a plurality of cam recesses, wherein:
- each cam recess (505, 506) of the plurality of cam recesses subtends a number M≥1 of slot pitches, with M being an integer,
- there is a distance of at least one slot pitch between the upper and lower closed ends (505f, 506f) of a cam recess of the plurality of cam recesses and the upper or lower outlets (505u, 506u) of a next cam recess (505,506) of the plurality of cam recesses, respectively,
and wherein all cam recesses of the plurality of cam recesses (505,506) are arranged in sequence in a predetermined arc of circumference.

4. A system according to any one of claims 1 to 3, further comprising an outer containment annular plate (512), placed radially opposite to said cylindrical containment (450) for hairpins (100, 200) on a side of said upper circular plate (502) and comprising one or more cam recesses (515) of outer containment annular plate each having a closed end (515f) and a cam recess outlet (515u) of outer containment annular plate, the one or more recesses (515) of outer containment annular plate being configured to accommodate the leg (202) of the at least one I-pin (200) extending at the same time into a radial slot (456) of said cylindrical containment (450) for hairpins (100, 200), the one or more cam recesses (515) of outer containment annular plate being positioned so that, upon relative rotation of the outer containment annular plate (512) with respect to the cylindrical containment (450) for hairpins (100, 200), said cam recess outlet (515u) of outer containment annular plate is positioned so as to lead radially toward said cylindrical inner containment (500).

5. A system according to claim 4, wherein said one or more cam recesses (515) of outer containment annular plate are a plurality of cam recesses (515) of outer containment annular plate, wherein:
- each cam recess (515) of the plurality of cam recesses subtends a number M≥1 of slot pitches,
- there is a distance of at least one slot pitch between the closed end (515f) of a cam recess of the plurality of cam recesses of outer containment annular plate and the cam recess outlet (515u) of a next cam recess (515) of the plurality of cam recesses of outer containment annular plate,
and wherein all the recesses of the plurality of cam recesses (515) of outer containment annular plate are arranged in sequence in a predetermined arc of circumference.

6. A system (800) for assembly and insertion in a stator or rotor pack of a winding assembly (600) comprising one or more layers, each layer consisting of a circumferential arrangement of hairpins (100) and/or I-pins (200), the hairpins comprising a head end and one or more legs with a respective free insertion end, the I-pins having a free insertion end, the system (800) for assembly and insertion in the stator or rotor pack comprising:
- a system (450,500) for inserting I-pins into the winding assembly (600) according to any one of claims 1 to 5, with a cylindrical containment (450) for hairpins (100, 200) and a cylindrical inner containment (500) inserted axially into the cylindrical containment (450) for hairpins (100, 200), the cylindrical inner containment (500) having a vertical wall (501) rotatable with respect to an upper circular plate (502) and a lower circular plate (503) included in the cylindrical inner containment;
- removable insertion means for the insertion of the hairpins (100) and the I-pins (200) into said winding assembly (600); and
- rotation means for rotation of the cylindrical containment (450) for hairpins (100, 200) about a winding axis (600), said rotation means being configured to perform rotations by one or more discrete slot pitches about the winding axis; and
- rotary rotation means for rotation of the vertical cylindrical wall (501) with respect to the upper circular plate (502) and the lower circular plate (503);
the system (800) for the assembly and insertion in the stator pack or rotor pack further comprising a rotating table (810) with a first hole for housing of the system (450,500) for inserting I-pins into the winding assembly (600), wherein the rotating table (810):
- is configured to rotate about a table axis so as to take the system (450,500) for inserting I-pins into the winding assembly (600) from an assembly position of the winding assembly (600) to an insertion position for insertion of the winding assembly (600) into the stator or rotor pack,
- has a first table surface and a second table surface opposite to said first table surface;
and wherein:
- the I system (450,500) for inserting I-pins into the winding assembly (600) is configured to receive said hairpins and I-pins from said free insertion ends, on a side of said first table surface in the assembly position;
- feeding means of the stator or rotor pack are provided on a side of said second table surface at the insertion position; and
- the system for assembly and insertion in the stator or rotor pack further comprises relative introduction means (830) for relative introduction of said winding assembly (600) into said stator or rotor pack in said insertion position.

7. A method for inserting I-pins (200) into a winding assembly (600) for a stator or rotor, the winding assembly (600) comprising an innermost crown, an outermost crown, and one or more intermediate crowns, the method comprising performing a step in which there is provided a system for inserting I-pins into a winding assembly (600) according to one of claims 1 to 5, or a system for assembly and insertion in a stator or rotor pack of the winding assembly (600) according to claim 6, as well as performing the following steps:
A. inserting one or more I-pins (200) into the innermost crown by means of the system for inserting I-pins into the winding assembly (600) according to claim 1;
B. inserting one or more I-pins (200) into the intermediate crowns by means of the system for inserting I-pins into the winding assembly (600);
C. inserting one or more I-pins (200) into the outermost crown by means of the system for inserting I-pins into the winding assembly (600) according to claim 4;
D. moving the winding assembly (600) to a previously positioned stator or rotor pack; and
E. inserting the winding assembly (600) into the stator pack.

## Patentansprüche

1. System (450, 500) zum Einsetzen von I-Stiften in eine Wicklungsanordnung (600) für einen Stator oder Rotor, umfassend eine zylindrische Aufnahme (450) für U-Stifte (100, 200), wobei das System **dadurch gekennzeichnet, dass** es ferner eine zylindrische innere Aufnahme (500) umfasst, die axial in die zylindrische Aufnahme (450) für U-Stifte (100, 200) eingesetzt wird, die eine Reihe von Radialschlitzen (456) umfasst, die sequentiell um ein Schlitzabstand beabstandet sind, wobei die zylindrische innere Aufnahme (500) ferner umfasst:
eine obere kreisförmige Platte (502) mit einer oder mehreren oberen Nockenvertiefungen (505) aufweisend ein oberes geschlossenes Ende (505f) und einen oberen Auslass (505u) auf einem äußeren kreisförmigen Umfang derselben;
eine untere kreisförmige Platte (503) mit einer oder mehreren unteren Nockenvertiefungen (506) aufweisend ein unteres geschlossenes Ende (506f) und einen unteren Auslass (506u) auf einem äußeren kreisförmigen Umfang derselben;
eine vertikale zylindrische Wand (501), die sich von der oberen kreisförmigen Platte (502) zu der unteren kreisförmigen Platte (503) erstreckt und drehbar in Bezug auf die obere kreisförmige Platte (502) und die untere kreisförmige Platte (503) eingebaut wird;
und wobei:
- die obere kreisförmige Platte (502) und die untere kreisförmige Platte (503) miteinander einstückig ausgebildet sind;
- die eine oder mehrere oberen und unteren Nockenvertiefungen (505, 506) in Anzahl übereinstimmen und entsprechend positioniert sind, sodass sie dazu konfiguriert sind, ein Bein (202) von mindestens einem I-Stift (200) in beide Vertiefungen einzuführen;
- die vertikale zylindrische Wand (501) nicht durchgehend ist und eine oder mehrere Öffnungen (520) umfasst, in einer Anzahl, die der einen oder mehreren oberen Nockenvertiefungen (505) entspricht, entlang einer Vertikalerstreckung eines Kreisbogens, wobei die eine oder mehreren Öffnungen (520) positioniert sind, sodass bei relativer Drehung der vertikalen zylindrischen Wand (501) in Bezug auf die obere kreisförmige Platte (502) und die untere kreisförmige Platte (503) die oberen (505u) und unteren (506u) Auslässe in den Kreisbogen der einen oder mehreren Öffnungen (520) münden;
- eine Fläche der oberen kreisförmigen Platte (502), die der unteren kreisförmigen Platte (502) zugewandt ist, obere radiale Aufnahmeelementen (502a) umfasst, die radial angeordnet sind;
- eine Fläche der unteren kreisförmigen Platte (502), die der oberen kreisförmigen Platte (503) zugewandt ist, untere radiale Aufnahmeelementen (503a) umfasst, die radial angeordnet sind; und
- die oberen radialen Aufnahmeelementen (502a) und die unteren radialen Aufnahmeelementen (503a) dazu konfiguriert sind, das Bein (202) des mindestens einen I-Stifts (200) zwischen (507) zwei aufeinanderfolgenden oberen (502a) und unteren (503a) radialen Aufnahmeelementen aufzunehmen und das Bein (202), das aus den oberen (505u) und unteren (506u) Auslässen austritt, in einen radialen Schlitz (456) der zylindrischen Aufnahme (450) für U-Stifte (100, 200) freizugeben.

2. System nach Anspruch 1, wobei die zylindrische Aufnahme (450) für U-Stifte (100, 200) eine Reihe von radial einziehbaren Fingern (455) umfasst, um die Reihe von radialen Schlitzen (456) zu bilden, und wobei die vertikale zylindrische Wand (501), wo die eine oder mehrere Öffnungen (520) nicht vorhanden sind, eine Reihe von vertikalen Schlitzen (501s) umfasst, die dazu konfiguriert sind, die radial einziehbaren Finger (455) zu überfahren.

3. System nach Anspruch 1 oder 2, wobei die eine oder mehrere oberen und unteren Nockenvertiefungen (505, 506) eine Mehrzahl von Nockenvertiefungen sind, wobei:
- jede Nockenvertiefung (505, 506) der Mehrzahl von Nockenvertiefungen eine Anzahl M≥.l von Schlitzabständen begrenzt, wobei M eine ganze Zahl ist,
- ein Abstand von mindestens einem Schlitzabstand zwischen den oberen und unteren geschlossenen Enden (505f, 506f) einer Nockenvertiefung der Mehrzahl von Nockenvertiefungen und den oberen oder unteren Auslässen (505u, 506u) einer nächsten Nockenvertiefung (505, 506) der Mehrzahl von Nockenvertiefungen vorhanden ist,
und wobei alle Nockenvertiefungen der Mehrzahl von Nockenvertiefungen (505, 506) in einer vorgegebenen Kreisbogensequenz angeordnet sind.

4. System nach einem der Ansprüche 1 bis 3, ferner umfassend eine äußere ringförmige Aufnahmeplatte (512), die sich radial gegenüber der zylindrischen Aufnahme (450) für U-Stifte (100, 200) auf einer Seite der oberen kreisförmigen Platte (502) angeordnet ist und umfassend eine oder mehrere Nockenvertiefungen (515) der äußeren ringförmigen Aufnahmeplatte, wobei jede ein geschlossenes Ende (515f) und einen Nockenvertiefung-Auslass (515u) der äußeren ringförmigen Aufnahmeplatte aufweist, wobei die eine oder mehreren Vertiefungen (515) der äußeren ringförmigen Aufnahmeplatte dazu konfiguriert sind, das Bein (202) des mindestens einen I-Stifts (200) aufzunehmen, das sich gleichzeitig in einen radialen Schlitz (456) der zylindrischen Aufnahme (450) für U-Stifte (100, 200) erstreckt, wobei die eine oder mehreren Nockenvertiefungen (515) der äußeren ringförmigen Aufnahmeplatte positioniert sind, sodass bei relativer Drehung der äußeren ringförmigen Aufnahmeplatte (512) in Bezug auf die zylindrische Aufnahme (450) für U-Stifte (100, 200) der Nockenvertiefung-Auslass (515u) der äußeren ringförmigen Aufnahmeplatte positioniert wird, um radial zu der zylindrischen inneren Aufnahme (500) zu führen.

5. System nach Anspruch 4, wobei die eine oder mehreren Nockenvertiefungen (515) der äußeren ringförmigen Aufnahmeplatte eine Mehrzahl von Nockenvertiefungen (515) der äußeren ringförmigen Aufnahmeplatte sind, wobei:
- jede Nockenvertiefung (515) der Mehrzahl von Nockenvertiefungen eine Anzahl M≥l von Schlitzabständen begrenzt,
- ein Abstand von mindestens einem Schlitzabstand zwischen dem geschlossenen Ende (515f) einer Nockenvertiefung der Mehrzahl von Nockenvertiefungen der äußeren ringförmigen Aufnahmeplatte und dem Nockenvertiefung-Auslass (515u) einer nächsten Nockenvertiefung (515) der Mehrzahl von Nockenvertiefungen der äußeren ringförmigen Aufnahmeplatte vorhanden ist,
und wobei alle Vertiefungen der Mehrzahl von Nockenvertiefungen (515) der äußeren ringförmigen Aufnahmeplatte in einer vorgegebenen Kreisbogensequenz angeordnet sind.

6. System (800) zum Einbau und zum Einsetzen in ein Stator- oder Rotorpaket einer Wicklungsanordnung (600), die eine oder mehrere Schichten umfasst, wobei jede Schicht aus einer Umfangsanordnung von U-Stiften (100) und/oder I-Stiften (200) besteht, wobei die U-Stifte ein Kopfende und ein oder mehrere Beine mit einem jeweiligem freiem Einführungsende umfassen, und die I-Stifte ein freies Einführungsende aufweisen, das System (800) zum Einbau und zum Einsetzen in das Stator- oder Rotorpaket umfassend:
- ein System (450, 500) zum Einsetzen von I-Stiften in die Wicklungsanordnung (600) nach einem der Ansprüche 1 bis 5, mit einer zylindrischen Aufnahme für U-Stifte (100, 200) und einer zylindrischen inneren Aufnahme (500), die axial in die zylindrische Aufnahme (450) für U-Stifte (100, 200) eingesetzt wird, wobei die zylindrische innere Aufnahme (500) eine vertikale Wand (501) aufweist, die drehbar in Bezug auf eine obere kreisförmige Platte (502) und eine untere kreisförmige Platte (503) ist, die in der zylindrischen inneren Aufnahme enthalten sind;
- lösbare Einführmittel zum Einsetzen der U-Stifte (100) und der I-Stifte (200) in die Wicklungsanordnung (600); und
- Drehungsmittel zur Drehung der zylindrischen Aufnahme (450) für U-Stifte (100, 200) um eine Wicklungsachse (600), wobei die Rotationsmittel dazu konfiguriert sind, Drehungen um einen oder mehrere diskrete Schlitzabstände um die Wicklungsachse durchzuführen; und
- drehbare Drehungsmittel zur Drehung der vertikalen zylindrischen Wand (501) in Bezug auf die obere kreisförmige Platte (502) und die untere kreisförmige Platte (503);
wobei das System (800) zum Einbau und zum Einsetzen in das Stator- oder Rotorpaket ferner einen Drehtisch (810) mit einer ersten Bohrung zum Aufnehmen des Systems (450, 500) zum Einsetzen von I-Stiften in die Wicklungsanordnung (600) umfasst, wobei der Drehtisch (810):
- dazu konfiguriert ist, um eine Tischachse zu drehen, um das System (450, 500) zum Einsetzen von I-Stiften in die Wicklungsanordnung (600) von einer Montageposition der Wicklungsanordnung (600) in eine Einsetzposition zum Einsetzen der Wicklungsanordnung (600) in das Stator- oder Rotorpaket zu bringen,
- eine erste Tischoberfläche und eine zweite Tischoberfläche aufweist, die der ersten Tischoberfläche gegenüberliegt;
und wobei:
- das I System (450, 500) zum Einsetzen von I-Stiften in die Wicklungsanordnung (600) dazu konfiguriert ist, die U-Stifte und I-Stifte von den freien Einführenden, auf einer Seite der ersten Tischoberfläche in der Montageposition aufzunehmen;
- Zuführmittel für das Stator- oder Rotorpaket auf einer Seite der zweiten Tischoberfläche an der Einsetzposition vorgesehen sind; und
- das System zum Einbau und zum Einsetzen in das Stator- oder Rotorpaket ferner relative Einführmittel (830) umfasst, zur relativen Einführung der Wicklungsanordnung (600) in das Stator- oder Rotorpaket in der Einsetzposition.

7. Verfahren zum Einsetzen von I-Stiften (200) in eine Wicklungsanordnung (600) für einen Stator oder Rotor, wobei die Wicklungsanordnung (600) eine innerste Krone, eine äußerste Krone und eine oder mehrere Zwischenkronen umfasst, wobei das Verfahren Durchführen eines Schritts umfasst, in dem ein System zum Einsetzen von I-Stiften in eine Wicklungsanordnung (600) nach einem der Ansprüche 1 bis 5 oder ein System zum Einbau und zum Einsetzen in ein Stator- oder Rotorpaket der Wicklungsanordnung (600) nach Anspruch 6 vorgesehen ist, sowie Durchführen der folgenden Schritte:
A. Einsetzen eines oder mehrerer I-Stifte (200) in die innerste Krone mittels des Systems zum Einsetzen von I-Stiften in die Wicklungsanordnung (600) nach Anspruch 1;
B. Einsetzen eines oder mehrerer I-Stifte (200) in die Zwischenkronen mittels des Systems zum Einsetzen von I-Stiften in die Wicklungsanordnung (600);
C. Einsetzen eines oder mehrerer I-Stifte (200) in die äußerste Krone mittels des Systems zum Einsetzen von I-Stiften in die Wicklungsanordnung (600) nach Anspruch 4;
D. Bewegen der Wicklungsanordnung (600) zu einem zuvor positionierten Stator- oder Rotorpaket; und
E. Einsetzen der Wicklungsanordnung (600) in das Statorpaket.

## Revendications

1. Système (450, 500) pour l'insertion de broches en I dans un ensemble d'enroulement (600) pour un stator ou un rotor, comprenant un confinement cylindrique (450) pour des broches en U (100, 200), le système étant **caractérisé en ce qu'**il comprend en outre un confinement intérieur cylindrique (500) inséré axialement dans le confinement cylindrique (450) pour des broches en U (100, 200), lequel comprend une série de fentes radiales (456) espacées séquentiellement d'un pas de fente, le confinement intérieur cylindrique (500) comprenant en outre :
- une plaque circulaire supérieure (502) avec un ou plusieurs logements de came supérieurs (505) ayant une extrémité fermée supérieure (505f) et une sortie supérieure (505u) sur un périmètre circulaire extérieur de celle-ci ;
- une plaque circulaire inférieure (503) avec un ou plusieurs logements de came inférieurs (506) ayant une extrémité fermée inférieure (506f) et une sortie inférieure (506u) sur un périmètre circulaire extérieur de celle-ci ;
- une paroi cylindrique verticale (501), qui s'étend de la plaque circulaire supérieure (502) à la plaque circulaire inférieure (503) et est montée rotative par rapport à ladite plaque circulaire supérieure (502) et ladite plaque circulaire inférieure (503) ;
et dans lequel :
- la plaque circulaire supérieure (502) et la plaque circulaire inférieure (503) sont solidaires l'une de l'autre ;
- le ou les logements de came supérieurs et inférieurs (505, 506) sont en nombre correspondant et positionnés de manière correspondante de sorte qu'ils soient configurés pour insérer une patte (202) d'au moins une broche en I (200) dans les deux logements ;
- la paroi cylindrique verticale (501) n'est pas continue et comprend un ou plusieurs vides (520), en un nombre correspondant audit ou auxdits logements de came supérieurs (505), le long d'une extension verticale entière d'un arc de circonférence, le ou les vides (520) étant positionnés de sorte que, lors d'une rotation relative de la paroi cylindrique verticale (501) par rapport à ladite plaque circulaire supérieure (502) et à ladite plaque circulaire inférieure (503), lesdites sorties supérieure (505u) et inférieure (506u) débouchent dans l'arc de circonférence dudit ou desdits vides (520) ;
- une face de la plaque circulaire supérieure (502) faisant face à la plaque circulaire inférieure comprend des éléments de confinement radiaux supérieurs (502a) disposés radialement ;
- une face de la plaque circulaire inférieure (503) faisant face à la plaque circulaire supérieure comprend des éléments de confinement radiaux inférieurs (503a) disposés radialement ; et
- les éléments de confinement radiaux supérieurs (502a) et les éléments de confinement radiaux inférieurs (503a) sont configurés pour accueillir la patte (202) de ladite au moins une broche en I (200) entre (507) deux éléments de confinement radiaux supérieurs (502a) et inférieurs (503a) consécutifs et pour libérer la patte (202) sortant desdites sorties supérieure (505u) et inférieure (506u) dans une fente radiale (456) dudit confinement cylindrique (450) pour des broches en U (100, 200).

2. Système selon la revendication 1, dans lequel ledit confinement cylindrique (450) pour des broches en U (100, 200) comprend une série de doigts rétractables radialement (455) pour former la série de fentes radiales (456), et dans lequel ladite paroi cylindrique verticale (501) comprend, là où ledit ou lesdits vides (520) ne sont pas présents, une série de fentes verticales (501s) configurées pour le dépassement des doigts rétractables radialement (455).

3. Système selon la revendication 1 ou 2, dans lequel ledit ou lesdits logements de came supérieurs et inférieurs (505, 506) sont une pluralité de logements de came, dans laquelle :
- chaque logement de came (505, 506) de la pluralité de logements de came sous-tend un nombre M≥1 de pas de fente, M étant un nombre entier,
- il existe une distance d'au moins un pas de fente entre les extrémités fermées supérieure et inférieure (505f, 506f) d'un logement de came de la pluralité de logements de came et les sorties supérieure ou inférieure (505u, 506u) d'un logement de came suivant (505, 506) de la pluralité de logements de came, respectivement,
et dans laquelle tous les logements de came de la pluralité de logements de came (505, 506) sont disposés en séquence dans un arc de circonférence prédéterminé.

4. Système selon l'une quelconque des revendications 1 à 3, comprenant en outre une plaque annulaire de confinement extérieur (512), placée radialement à l'opposé dudit confinement cylindrique (450) pour des broches en U (100, 200) d'un côté de ladite plaque circulaire supérieure (502) et comprenant un ou plusieurs logements de came (515) de la plaque annulaire de confinement extérieur, chacun ayant une extrémité fermée (515f) et une sortie de logement de came (515u) de la plaque annulaire de confinement extérieur, le ou les logements (515) de la plaque annulaire de confinement extérieur étant configurés pour accueillir la patte (202) de ladite au moins une broche en I (200) s'étendant en même temps dans une fente radiale (456) dudit confinement cylindrique (450) pour des broches en U (100, 200), le ou les logements de came (515) de la plaque annulaire de confinement extérieur étant positionnés de sorte que, lors d'une rotation relative de la plaque annulaire de confinement extérieur (512) par rapport au confinement cylindrique (450) pour des broches en U (100, 200), ladite sortie de logement de came (515u) de la plaque annulaire de confinement extérieur soit positionnée de manière à déboucher radialement vers ledit confinement intérieur cylindrique (500).

5. Système selon la revendication 4, dans lequel ledit ou lesdits logements de came (515) de la plaque annulaire de confinement extérieur sont une pluralité de logements de came (515) de la plaque annulaire de confinement extérieur, dans laquelle :
- chaque logement de came (515) de la pluralité de logements de came sous-tend un nombre M≥1 de pas de fente,
- il existe une distance d'au moins un pas de fente entre l'extrémité fermée (515f) d'un logement de came de la pluralité de logements de came de la plaque annulaire de confinement extérieur et la sortie de logement de came (515u) d'un logement de came suivant (515) de la pluralité de logements de came de la plaque annulaire de confinement extérieur,
et dans laquelle tous les logements de la pluralité de logements de came (515) de la plaque annulaire de confinement extérieur sont disposés en séquence dans un arc de circonférence prédéterminé.

6. Système (800) pour l'assemblage et l'insertion dans un paquet de stator ou de rotor d'un ensemble d'enroulement (600) comprenant une ou plusieurs couches, chaque couche étant constituée d'un agencement circonférentiel de broches en U (100) et/ou de broches en I (200), les broches en U comprenant une extrémité de tête et une ou plusieurs pattes avec une extrémité libre d'insertion respective, les broches en I ayant une extrémité libre d'insertion, le système (800) pour l'assemblage et l'insertion dans le paquet de stator ou de rotor comprenant :
- un système (450, 500) pour l'insertion de broches en I dans l'ensemble d'enroulement (600) selon l'une quelconque des revendications 1 à 5, avec un confinement cylindrique pour des broches en U (100, 200) et un confinement intérieur cylindrique (500) inséré axialement dans le confinement cylindrique (450) pour des broches en U (100, 200), le confinement intérieur cylindrique (500) ayant une paroi verticale (501) rotative par rapport à une plaque circulaire supérieure (502) et une plaque circulaire inférieure (503) incluses dans le confinement intérieur cylindrique ;
- des moyens d'insertion amovibles pour l'insertion des broches en U (100) et des broches en I (200) dans ledit ensemble d'enroulement (600) ; et
- des moyens de rotation pour la rotation du confinement cylindrique (450) pour des broches en U (100, 200) autour d'un axe d'enroulement (600), lesdits moyens de rotation étant configurés pour effectuer des rotations par un ou plusieurs pas de fente discrète autour de l'axe d'enroulement ; et
- des moyens de rotation rotative pour la rotation de la paroi cylindrique verticale (501) par rapport à la plaque circulaire supérieure (502) et à la plaque circulaire inférieure (503) ;
le système (800) pour l'assemblage et l'insertion dans le paquet de stator ou de rotor comprenant en outre une table rotative (810) avec un premier trou pour le logement du système (450, 500) pour l'insertion de broches en I dans l'ensemble d'enroulement (600), dans lequel la table rotative (810) :
- est configurée pour tourner autour d'un axe de table afin de faire passer le système (450, 500) pour l'insertion de broches en I dans l'ensemble d'enroulement (600) d'une position d'assemblage de l'ensemble d'enroulement (600) à une position d'insertion pour l'insertion de l'ensemble d'enroulement (600) dans le paquet de stator ou de rotor,
- présente une première surface de table et une seconde surface de table opposée à ladite première surface de table ;
et dans lequel :
- le système (450, 500) pour l'insertion de broches en I dans l'ensemble d'enroulement (600) est configuré pour recevoir lesdites broches en U et broches en I depuis lesdites extrémités libres d'insertion, sur un côté de ladite première surface de table en position d'assemblage ;
- des moyens d'alimentation du paquet de stator ou de rotor sont prévus sur un côté de ladite seconde surface de table à la position d'insertion ; et
- le système pour l'assemblage et l'insertion dans le paquet de stator ou de rotor comprend en outre des moyens d'introduction relative (830) pour l'introduction relative dudit ensemble d'enroulement (600) dans ledit paquet de stator ou de rotor en ladite position d'insertion.

7. Procédé d'insertion de broches en I (200) dans un ensemble d'enroulement (600) pour un stator ou un rotor, l'ensemble d'enroulement (600) comprenant une couronne la plus interne, une couronne la plus externe, et une ou plusieurs couronnes intermédiaires, le procédé comprenant l'exécution d'une étape dans laquelle est prévu un système pour l'insertion de broches en I dans un ensemble d'enroulement (600) selon l'une des revendications 1 à 5, ou un système pour l'assemblage et l'insertion dans un paquet de stator ou de rotor de l'ensemble d'enroulement (600) selon la revendication 6, ainsi que l'exécution des étapes suivantes :
A. insérer une ou plusieurs broches en I (200) dans la couronne la plus interne au moyen du système pour l'insertion de broches en I dans l'ensemble d'enroulement (600) selon la revendication 1 ;
B. insérer une ou plusieurs broches en I (200) dans les couronnes intermédiaires au moyen du système pour l'insertion de broches en I dans l'ensemble d'enroulement (600) ;
C. insérer une ou plusieurs broches en I (200) dans la couronne la plus externe au moyen du système pour l'insertion de broches en I dans l'ensemble d'enroulement (600) selon la revendication 4 ;
D. déplacer l'ensemble d'enroulement (600) vers un paquet de stator ou de rotor préalablement positionné ; et
E. insérer l'ensemble d'enroulement (600) dans le paquet de stator.
